# EUROPÄISCHE PATENTSCHRIFT

(11) **EP 3 704 360 B1**
(45) Veröffentlichungstag und Bekanntmachung des Hinweises auf die Patenterteilung: **06.10.2021**
(21) Anmeldenummer: 18795649.5
(22) Anmeldetag: 31.10.2018
(51) Int. Cl.: F01N 1/08, F01N 3/10, F01N 13/00, F01N 3/20, F01N 3/28

(54) **ABGASANLAGE ZUR KOMPAKTEN UND EFFIZIENTEN NACHBEHANDLUNG UND SCHALLDÄMPFUNG DES ABGASES**
EXHAUST GAS SYSTEM FOR COMPACT AND EFFICIENT AFTERTREATMENT AND SOUND DAMPING OF THE EXHAUST GAS
INSTALLATION DE GAZ D'ÉCHAPPEMENT POUR LE POST-TRAITEMENT ET L'ATTÉNUATION DES SONS DE GAZ D'ÉCHAPPEMENT, DE MANIÈRE COMPACTE ET EFFICACE

(30) Priorität: 02.11.2017 DE 102017125619
(43) Veröffentlichungstag der Anmeldung: 09.09.2020
(73) Patentinhaber: Niessing Anlagenbau GmbH, 46325 Borken-Marbeck (DE); Hug Engineering GmbH, 39120 Magdeburg (DE); Fr. Lürssen Werft GmbH & Co. KG, 28759 Bremen (DE)
(72) Erfinder: NIESSING, Thomas, 46325 Borken (DE); HEMSING, Jürgen, 46354 Südlohn-Oeding (DE); GRAVERMANN, Andreas, 46342 Velen (DE); SPIEKER, Carsten, 28757 Bremen (DE); URBAN, Bernhard, 28205 Bremen (DE); LINDT, Mathias, 8800 Thalwil (CH); SCHMIDT, Uwe, 39122 Magdeburg (DE)
(74) Vertreter: Habbel, Ludwig
(86) Internationale Anmeldenummer: PCT/EP2018/079877
(87) Internationale Veröffentlichungsnummer: WO 2019/086539

(56) Entgegenhaltungen:
- EP-A2- 1 357 267
- DE-A1-102015 214 765
- DE-C1- 10 218 854

## Beschreibung

Die Erfindung betrifft eine Abgasanlage nach dem Oberbegriff des Anspruchs 1.

Eine gattungsgemäße Abgasanlage ist aus der EP 1 108 122 B1 bekannt.

Abgase von Dieselmotoren weisen systembedingt einen hohen Sauerstoffüberschuss auf. Daher kann das von Ottomotoren bekannte Prinzip des Dreiwegekatalysators, welches zur Reduktion der Stickoxide mit einem Sauerstoffmangel arbeitet, bei Dieselmotoren keine Anwendung finden. Bei dem für Dieselmotoren angewandten SCR-Verfahren (Selective Catalytic Reduction) handelt es sich um ein Verfahren, bei dem die Stickoxidemissionen chemisch, mittels Ammoniak (NH3), reduziert werden. Aufgrund der toxischen Eigenschaften von reinem Ammoniak wird auf eine Ammoniak-Vorläufersubstanz auf Harnstoffbasis zurückgegriffen, beispielsweise eine hochreine Harnstofflösung, die unter dem Handelsnamen AdBlue bekannt ist.

Diese Harnstofflösung wird mit zusätzlicher Luft in den Abgasstrang eingespeist oder direkt in das Abgas eingespritzt und dabei mittels Düsen zerstäubt. Innerhalb einer Reaktionsstrecke, welche zwischen dem Punkt der Harnstoffeindüsung und dem SCR-Katalysator liegt, kommt es zu einer endothermen Reaktion des Harnstoffes (Thermolyse), wobei reines Ammoniak gebildet wird, sowie zu einer Folgereaktion mit dem im Abgas vorkommenden Wasser (Hydrolyse), wobei ebenfalls reines Ammoniak gebildet wird. Das Ammoniak wird im SCR-Katalysator adsorbiert und für die SCR-Reaktion genutzt.

Bezogen auf die im Abgas enthaltene Menge an Stickoxid ist eine bestimmte Menge an Ammoniak erforderlich, um bei einer präzise stöchiometrischen Dosierung eine vollständige Reduzierung der Stickoxide zu ermöglichen. Bei einer solchen Dosierung wird das sogenannte Dosierverhältnis α als α = 1 definiert. Bei einer Überdosierung von Ammoniak (a > 1) kommt es zu dem so genannten Ammoniakschlupf, da das Ammoniak im SCR-Prozess nicht vollständig verbraucht wird. Auf Grund der toxischen Eigenschaften von Ammoniak ist der Ammoniakschlupf zu vermeiden. Außerdem werden bereits 15 ppm Ammoniak in der Raumluft als belästigend empfunden. Aus diesem Grund wird ein SCR-Katalysator üblicherweise mit einem Dosierverhältnis von α < 1 betrieben, der Ammoniak also bewusst unterdosiert. Aber auch in diesem normalen Betrieb, ohne eine Überdosierung, kann es zum unerwünschten Ammoniakschlupf kommen, wenn beispielsweise die Harnstofflösung nicht homogen verteilt wird. Dann nämlich kann es im SCR-Katalysator zu einer lokalen Überkonzentration von Ammoniak kommen, die durch die SCR-Reaktionen nicht mehr umgesetzt werden kann und anschließend mit dem Abgas abgeführt wird.

Aus der EP 1 108 122 B1, die als am nächsten kommender Stand der Technik angesehen wird, ist eine Abgasanlage bekannt, die einer Verbrennungsanlage wie einem Kraftwerk oder einem Verbrennungsmotor nachgeschaltet ist. Aus dieser Druckschrift ist es bekannt, dass in einen Abschnitt des Abgasrohrs, welcher als Schalldämpfer ausgestaltet ist, Harnstoff eingedüst wird. Die Austrittsöffnung der Düseneinrichtung ist zentral angeordnet, liegt also in der Mittelachse des Schalldämpfers. Anschließend vermischt sich innerhalb einer Mischerstrecke der Harnstoff mit dem Abgas. Um eine intensive und möglichst homogene Durchmischung zu erzielen, sind im Schalldämpfer Einbauten in Form so genannter Mischer vorgesehen, die eine turbulente Strömung im Abgas erzeugen sollen. Im Anschluss an die Mischerstrecke gelangt dieses Gemisch in den Katalysator, wo die Schadstoffe abgebaut bzw. umgewandelt werden.

Der Schalldämpfer ist bei diesem Stand der Technik annähernd zylindrisch ausgestaltet und weist eine doppelwandige Mantelfläche auf, wobei die Innenwand als flexibles, dünnes Blech ausgestaltet sein kann oder als Lochblech. Zwischen dieser Innenwand und der geschlossenen Außenwand ist absorbierendes, faseriges Material angeordnet wie Stahlwolle, Keramikwolle, Stahlvlies oder Faservlies. Eine weitere schalldämpfende Maßnahme besteht als Reflexionsdämpfung darin, dass die verwendeten Mischer in einem Abstand zueinander angeordnet sind, der auf die zu dämpfende Schallfrequenz abgestimmt ist. Schließlich kann noch eine dritte schalldämpfende Maßnahme vorgesehen sein, indem der Abgasstrom vom Schalldämpfer in den Katalysator um 180° umgelenkt wird und im Bereich dieser Umlenkung die Wand des Abgasrohrs mit einer schalldämmenden Auskleidung versehen ist.

Aus der US 2013/0333363 A1 ist eine Abgasreinigungsanlage für Fahrzeugmotoren bekannt, welches eine mit Durchtrittsöffnungen versehene Trennwand zwischen einem SCR-Katalysator und der daran anschließenden Abgasleitung, über welche das Abgas in die Atmosphäre abgegeben wird.

Aus der DE 197 20 410 A1 ist ein Auspufftopf mit Schalldämpfer für Kraftfahrzeuge bekannt, bei welchem der Abgasstrom durch verschiedene Kammern geführt wird.

Aus der EP 1 357 267 A2 ist eine Abgasanlage für einen Dieselmotor und ein zugehöriger Schalldämpfer bekannt. Die Abgasanlage weist einen Abgasstrang auf, der sich in wenigstens zwei Abgaswege verzweigt, bevor die dementsprechend zwei oder mehr Abgas-Teilströme wieder vereint und in den SCR-Katalysator geführt werden. Da das Abgas aufgeteilt wird, passiert ein Teilstrom andere Bestandteile der Abgasanlage als der zweite bzw. ein anderer Teilstrom, so dass nicht der gesamte Abgasstrom nacheinander durch die einzelnen Behandlungsstufen der Abgasanlage geführt wird. Der Schalldämpfer enthält mehrere Kammern. Parallel zueinander verlaufende Rohre erstrecken sich jeweils durch zwei Trennwände und verbinden jeweils eine Kammer mit einer übernächsten Kammer.

Aus der DE 102 18 854 C1 sind ein Abgasschalldämpfer und ein Verfahren zum Behandeln von Abgasen bekannt, wobei ein kühles Wasser-/Ölgemisch in eine Kammer des Abgasschalldämpfers eingespritzt werden kann und dieses Wasser-/Ölgemisch als Katalysatorflüssigkeit bezeichnet ist.

Aus der DE 10 2015 214 765 A1 sind ein Wechseleinschubelement für eine Abgasnachbehandlungs-Anordnung, eine zugehörige Abgasnachbehandlungs-Anordnung, ein Abgassystem und eine Brennkraftmaschine bekannt. Die einzelnen sogenannten Waben eines SCR-Katalysators sind als Wechseleinschubelemente ausgestaltet, die schnell und unkompliziert ausgewechselt werden können, was insbesondere im Langzeitbetrieb von Brennkraftmaschinen erforderlich werden kann. Um einerseits im Betrieb des Katalysators einen Bypass des zu behandelnden Abgasstroms zu verhindern, ist sicherzustellen, dass der Abgasstrom ausschließlich durch die Wechseleinschubelemente strömt. Andererseits soll der Austausch einzelner Wechseleinschubelemente nicht durch deren unerwünscht festen - aber dichten - Sitz innerhalb einer Halterung erschwert werden. Befasst sich diese Druckschrift mit der Abdichtung der einzelnen Wechseleinschubelemente, insbesondere mit der Ausgestaltung vorteilhafter Dichtelemente.

Der vorliegenden Erfindung liegt die Aufgabe zugrunde, eine gattungsgemäße Abgasanlage dahingehend zu verbessern, dass bei kompakten Abmessungen eine wirksame Reduzierung der Schallemissionen sowie eine besonders wirksame Reduzierung der Stickoxide ermöglicht wird.

Diese Aufgabe wird durch eine Abgasanlage nach Anspruch 1 gelöst. Vorteilhafte Ausgestaltungen sind in den Unteransprüchen beschrieben.

Die Erfindung schlägt mit anderen Worten vor, dass der Schalldämpfer selbst als Mischeinrichtung dient, also Turbulenzen im Abgasstrom erzeugt. Auf diese Weise kann ein ansonsten vorgesehener separater Mischer erübrigt werden, was erstens Material und Gewicht einspart, und was zweitens auch dazu beiträgt, die Abgasanlage mit möglichst kompakten Abmessungen herstellen zu können. Vorschlagsgemäß ist der Schalldämpfer daher als so genannter Umlenkschalldämpfer ausgeführt, also als eine Bauart, bei welcher die Schalldämpfung durch eine mehrfache Umlenkung des Abgasstroms bewirkt wird. Durch diese mehrfache Umlenkung werden vielfach Turbulenzen im Abgasstrom geschaffen, die eine intensive Durchmischung des Abgases mit dem eingedüsten Behandlungfluids sicherstellen.

Vorschlagsgemäß erfolgt also im Unterschied zum Gegenstand der EP 1 108 122 B1 eine gezielte und planmäßige akustische Nutzung der Umlenkung.

Die Ausgestaltung als Umlenkschalldämpfer ermöglicht in vielen Fällen, auf zusätzliches Dämpfungsmaterial zu verzichten und den Schalldämpfer vollständig faserfrei auszuführen. Dies wird im Hinblick auf den nachgeschalteten Katalysator als besonders vorteilhaft angesehen, weil die reaktive Oberfläche des Katalysators nicht durch Fasern abgedeckt werden kann und dementsprechend vollständig für die Behandlung des Abgases genutzt werden kann. Da die Katalysatoren typischerweise in Form von sogenannten Waben aufgebaut sind, nämlich eine Vielzahl von vergleichsweise kleinen Durchlassöffnungen aufweisen, besteht zudem die Gefahr, dass derartige Durchlassöffnungen durch die Fasern unpassierbar werden, so dass nicht nur die verfügbare reaktive Oberfläche des Katalysators verringert wird, sondern auch der Gegendruck bzw. der Druckverlust, den der Katalysator in der Abgasanlage bewirkt, in unerwünschter Weise vergrößert wird.

Vorschlagsgemäß ist weiterhin vorgesehen, dass zwischen einer Kammer des Schalldämpfers und dem Katalysator eine Trennwand angeordnet ist, die von mehreren sogenannten Halsrohren durchsetzt ist. Es handelt sich dabei um Rohre, die sich zu beiden Seiten der Trennwand erstrecken und dort enden. Das stromaufwärts angeordnete Ende, in welches das Abgas einströmt, wird als erstes Ende eines solchen Halsrohrs bezeichnet. Es befindet sich in der Kammer des Schalldämpfers. Das gegenüberliegende, zweite Ende befindet sich jenseits der Trennwand in dem Abschnitt der Abgasanlage, in welchem der Katalysator angeordnet ist. Die Turbulenzen, die der Umlenkschalldämpfer und die Abgasführung durch die Halsrohre bewirken, sorgen für eine sehr gute Homogenisierung des Abgases, was die gleichmäßige Verteilung des Behandlungfluids und die Strömungsgeschwindigkeit des Abgases betrifft. Zudem ermöglicht die Bauform des Schalldämpfers als Umlenkschalldämpfer eine kompakte Ausgestaltung der Abgasanlage mit vergleichsweise geringen Abmessungen.

Der angekoppelte Bauraum des SCR-Reaktors wird also ebenfalls gezielt akustisch eingesetzt. Weiterhin werden die akustisch planmäßig genutzten Umlenkungen zur kontrollierten Vermischung des Harnstoffes mit dem Abgas genutzt. Somit haben die Umlenkungen gewollte multifunktionale Eigenschaften.

Zu Gunsten möglichst kompakter Abmessungen der Abgasanlage sind gemäß dem vorliegenden Vorschlag der Schalldämpfer und der Katalysator in einem gemeinsamen Gehäuse angeordnet. Durch diese Ausgestaltung kann nicht nur der erforderliche Raumbedarf für die Abgasanlage verringert werden, sondern hierdurch kann insbesondere auch bewirkt werden, dass anders als bei einer additiven Aneinanderreihung eines Schalldämpfers einerseits und eines Katalysators andererseits eine vielmehr integrale Ausgestaltung der Abgasanlage ermöglicht wird, bei welcher beispielsweise auch die schalldämpfenden Eigenschaften des Katalysators in die Berechnung des Schalldämpfers einfließen können. Der Schalldämpfer kann dementsprechend ggf. kleiner bemessen werden. Im Vergleich dazu, einzelne Komponenten, wie den Katalysator und den Schalldämpfer in separaten Gehäusen herzustellen und dann additiv mithilfe von Verbindungsstücken zu einer gesamten Abgasanlage zu verbinden, kann also nicht nur durch das gemeinsame Gehäuse Bauraum gespart werden, sondern auch durch die vergleichsweise kleineren baulichen Abmessungen des Schalldämpfers selbst, so dass in zweifacher bzw. doppelter Hinsicht ein Raumgewinn hinsichtlich des erforderlichen Raumbedarfs ermöglicht wird.

Die erwähnte Trennwand kann vorteilhaft nicht als ebene Platte ausgestaltet sein, sondern vielmehr gebogen verlaufen. Wirtschaftlich vorteilhaft kann beispielsweise die Trennwand durch ein handelsübliches Bauteil geschaffen werden, z.B. in Form eines Klöpperbodens, wie er im Behälterbau üblich ist. Klöpperböden gehören in den unterschiedlichsten Durchmessern zum Standardangebot auf dem Markt, sodass dementsprechend preisgünstig ein für die jeweilige Abgasanlage geeigneter Klöpperboden verwendet werden kann. Der gebogene Verlauf der Trennwand ist insbesondere vorteilhaft, wenn die Abgasanlage hohen mechanischen Belastungen ausgesetzt wird. Wenn die Abgasanlage beispielsweise für den maritimen Einsatz vorgesehen ist, sind nicht nur die typischen sanften Bewegungen des Schiffs zu berücksichtigen, also unter anderem Neigungen um die Längs- und Querachsen, sondern insbesondere auch die harten Bewegungen, die mit entsprechend hohen Beschleunigungswerten verbunden sind und beispielsweise beim harten Einsetzen des Schiffs in die Wellen auftreten. Die gebogen ausgestaltet Trennwand weist ein hohes Maß an Eigensteifigkeit auf und unterstützt so, gegebenenfalls in Verbindung mit den verwendeten Materialien und Wandstärken der übrigen Bestandteile der Abgasanlage, eine mechanisch besonders robuste Ausgestaltung der Abgasanlage.

Die bekannten Abgasanlagen beziehen sich auf den Einsatzbereich bei stationären Großmotoren. Dort werden nicht nur andere Brennstoffe und Schmieröle verwendet, wodurch wiederum andere Verunreinigungen im Abgas auftreten als im maritimen Bereich, sondern insbesondere steht bei stationären Großmotoren für die Abgasanlage ein größerer Bauraum - häufig ein praktisch nicht eingeschränkter Bauraum - zur Verfügung. Bei der maritimen Anwendung der Abgasanlage hingegen ist der verfügbare Bauraum stark begrenzt, und dies trotz erheblicher Anforderungen an die akustische Wirksamkeit, da beispielsweise im privaten Yachtbau Kabinen, die zum Aufenthalt des Eigners oder von Gästen vorgesehen sind, in geringer Entfernung vom Maschinenraum und der Abgasanlage geplant sind. Die vorschlagsgemäße Abgasanlage ermöglicht eine signifikante Längeneinsparung bei der Eindüsstrecke. Auch die Vermischung von Reaktionsmittel mit dem Abgas erfolgt platzsparend, wobei sowohl die Vermischung als auch die Pyrolyse des Harnstoffes im akustischen Teil der Systems geschieht.

Grundsätzlich unterscheiden sich Abgasanlagen für Großmotoren von Abgasanlagen, die bei Landfahrzeugen wie PKWs oder LKWs eingesetzt werden. Aufgrund erheblich größerer Hubräume und geringeren Drehzahlen ist ein anderes Frequenzspektrum bei der akustischen Auslegung der Abgasanlagen für Großmotoren zu berücksichtigen als bei PKW- oder LKW-Motoren. Die vorschlagsgemäße Abgasanlage ist besonders gut geeignet, dieses Frequenzspektrum eines Großmotors wirksam zu dämpfen.

Vorteilhaft kann im Bereich des erwähnten zweiten Endes eines Halsrohrs - und insbesondere vorteilhaft bei mehreren oder sämtlichen Halsrohren - ein Verteiler vorgesehen sein, der eine weitere Verwirbelung bzw. Strömungsumlenkung des Abgases bewirkt. Die vorangegangenen Turbulenzen, die durch den Umlenkschalldämpfer bewirkt worden sind, ergeben zusammen mit dem Einfluss des Verteilers eine Homogenisierung des Abgasstromes in zweifacher Hinsicht:

Erstens wird eine sehr intensive und gleichmäßige Vermischung des eingedüsten Behandlungsfluids mit dem Abgas sichergestellt. Zweitens bewirkt die Verwirbelung des Abgases vor dem Eintritt in die Waben des Katalysators, dass über die Eintrittsfläche des Katalysators hinweg sehr gleichmäßige Strömungsverhältnisse herrschen. Das Abgas tritt also über die gesamte Fläche des Katalysators hinweg mit annähernd gleicher Geschwindigkeit in und durch den Katalysator. Hierdurch wird eine überall gleichmäßige Behandlung des Abgases sichergestellt. Zonen, an denen beispielsweise die Strömungsgeschwindigkeit unzulässig hoch wäre, und somit die erforderliche Reaktionszeit im Katalysator unterschritten würde, werden vermieden. Im Ergebnis resultiert aus dieser zweifachen Homogenisierung eine hervorragende, nahezu vollständige Umsetzung des eingedüsten Behandlungsfluids. Erste praktische Versuche unter Verwendung eines SCR-Katalysators zur Umsetzung von NOx-Anteilen im Abgas, und unter Verwendung einer Harnstofflösung als Behandlungsfluid haben NOx-Umsatzraten von 96 % ergeben und eine hervorragende Strömungsverteilung mit einer Mischgüte von mehr als 99,6 % an der Eintrittsfläche der Waben des Katalysators.

Die vorliegende Erfindung kann grundsätzlich bei nahezu jedem Dieselmotor eingesetzt werden, sie eignet sich jedoch besonders vorteilhaft für Stationär- und Großmotoren, also Motoren, wie sie beispielsweise in Schiffen, Notstromaggregaten oder Blockheizkraftwerken eingesetzt werden. Nachfolgend wird die Erfindung anhand des Beispiels einer Abgasanlage für einen Schiffsmotor beschrieben. Da die Anforderungen hinsichtlich der verwendeten Motoren und hinsichtlich des zur Verfügung stehenden Einbauraums bei Schiffen häufig nicht über eine gewisse Kleinserie hinweg gleich sind, sondern von einem zum anderen Schiff unterschiedlich sein können, kann der vorliegende Vorschlag in einer Vielzahl von unterschiedlichen Varianten verwirklicht werden:

Die Mischeinrichtung, die in der Mischerstrecke vorgesehen ist, kann in einer bevorzugten Ausführungsform ausschließlich in Form des Umlenkschalldämpfers ausgeführt sein, es können jedoch auch zusätzliche Mischer im Abgasstrom angeordnet werden.

Solch zusätzliche Mischer können entweder innerhalb des Schalldämpfers angeordnet werden oder diesem stromaufwärts vorgelagert.

Die Austrittsöffnung der Düseneinrichtung kann ebenfalls entweder innerhalb des Schalldämpfers angeordnet sein oder außerhalb davon, beispielsweise in einem Rohrstutzen, der stromaufwärts von dem Schalldämpfer vorgesehen ist und beispielsweise zur Verbindung des Schalldämpfers mit einem vorgeschalteten Abschnitt der Abgasanlage dient.

Der Verteiler, der dem zweiten Ende der Halsrohre zugeordnet ist, kann im Halsrohr angeordnet sein, außen neben dem Halsrohr, oder stromabwärts hinter dem zweiten Ende des Halsrohrs. Wesentlich ist, dass ein ansonsten geradlinig aus dem Halsrohr in axialer Richtung austretender Abgasstrom mittels des Verteilers in einer radial nach außen strömenden Richtung abgelenkt wird.

Vorteilhaft kann der Verteiler eine Prallplatte aufweisen, welche das zweite Ende des Halsrohres ganz oder teilweise verschließt. Stromaufwärts vor der Prallplatte sind in der Wand des Halsrohrs Durchbrüche vorgesehen. Dadurch, dass der Abgasstrom mittels der Prallplatte großteils oder vollständig am axialen Austritt aus dem zweiten Ende des Halsrohrs gehindert wird und stattdessen radial nach außen durch die Durchbrüche aus dem Halsrohr austreten muss, wird der Abgasstrom regelrecht versprüht und in hohem Maße homogenisiert. Eine besonders gleichmäßige Verteilung des aus dem Halsrohr austretenden Abgases kann beispielsweise dadurch ermöglicht werden, dass die Durchbrüche in der Wand des Halsrohrs in Form eines Lochblechs bereitgestellt werden, so dass beispielsweise ein dementsprechend zylindrischer Abschnitt eines Lochblechs an das ansonsten geschlossen ausgestaltete Halsrohr anschließen kann, wobei das zweite Ende des Halsrohrs durch dieses Lochblech geschaffen wird und mittels der erwähnten Prallplatte größtenteils verschlossen wird.

Vorteilhaft kann nicht nur die bereits erwähnte Kammer im Schalldämpfer vorgesehen sein, sondern dieser Kammer eine zweite Kammer vorgeschaltet sein, die dementsprechend als Vorkammer bezeichnet wird. Das Abgas gelangt also von der Vorkammer in Strömungsrichtung in die Kammer. Diese Verbindung zwischen Vorkammer und Kammer wird wiederum durch Halsrohre ermöglicht, welche in einer die Kammer von der Vorkammer trennenden Trennwand angeordnet sind. Diese Halsrohre können prinzipiell genauso ausgestaltet sein wie die weiter oben erwähnten Halsrohre, welche die Verbindung zwischen der Kammer und dem Katalysator schaffen. Sie können also ebenfalls an ihrem jeweiligen zweiten Ende mit einem Verteiler zusammenwirken, der eine Strömungsumlenkung bewirkt. Durch die Vorkammer wird nicht nur die schalldämpfende Wirkung, sondern auch die Homogenisierung des Abgases verbessert, wobei nach wie vor kompakte Abmessungen der Abgasanlage eingehalten werden können. Um die schalldämpfenden und homogenisierenden Eigenschaften der Abgasanlage noch weiter zu verbessern, kann die Abgasanlage zwei oder mehr hintereinander geschaltete Vorkammern aufweisen, wenn die räumlichen Verhältnisse dies zulassen.

Vorteilhaft kann das Gehäuse des Katalysators eine Wartungsöffnung aufweisen. Auf diese Weise kann im Rahmen regelmäßiger Wartungsarbeiten im Katalysator angefallener Staub entfernt werden, oder es können ggf. beschädigte, einzelne Waben des Katalysators ausgetauscht werden.

Dabei kann besonders vorteilhaft vorgesehen sein, dass die Wartungsöffnung als Mannloch ausgestaltet ist und eine Öffnungsweite ― z. B. bei einem runden Mannloch einen Durchmesser - von wenigstens 400 mm aufweist, so dass nicht nur für Hände oder Werkzeuge der Zugriff ins Innere des Katalysators ermöglicht wird, sondern Wartungsarbeiten dadurch erleichtert werden, dass sich Personal im Inneren des Katalysators aufhalten kann. Je nach Leistungsfähigkeit des Motors und dem damit einhergehenden Volumen des Abgasstroms kann das Gehäuse des Katalysators einen Durchmesser von beispielsweise 1,5 m oder noch mehr aufweisen, so dass dem Wartungspersonal problemlos der Aufenthalt im Inneren des Katalysators möglich ist.

Die Einlassöffnung, durch welche das Abgas in das Innere des Schalldämpfers gelangt, kann beispielsweise axial an den Schalldämpfer anschließen. Je nach den baulichen Gegebenheiten und dem zur Verfügung stehenden Einbauraum für die Abgasanlage kann es jedoch vorgesehen sein, dass das Abgas vom Motor seitlich in den Schalldämpfer eingeleitet wird, so dass dementsprechend die Einlassöffnung in der Mantelfläche des Schalldämpfers angeordnet ist, so dass das Abgas beispielsweise radial oder tangential in die Kammer bzw. in die ggf. vorgesehene Vorkammer des Schalldämpfers einströmt. Um in derartigen Fällen eine zusätzliche Geräuschentwicklung zu verhindern, die ansonsten dadurch hervorgerufen werden könnte, dass das in den Schalldämpfer einströmende Abgas auf ein Halsrohr prallt, ist in diesen Fällen vorteilhaft vorgesehen, dass das Innere des Schalldämpfers in dem Einströmungsbereich, welcher der Einlassöffnung benachbart ist, frei von Halsrohren ist.

Die wirksame reaktive Oberfläche des Katalysators kann innerhalb eines Abgasrohrs mit einem vorgegebenen Durchmesser dadurch verbessert werden, dass die einzelnen Waben des Katalysators länger ausgestaltet werden und so eine größere reaktive Oberfläche geschaffen wird. Dabei können eigens angefertigte, besonders lange Waben verwendet werden. Wirtschaftlich vorteilhaft kann allerdings vorgesehen sein, handelsübliche Waben zu verwenden und diese in Strömungsrichtung unmittelbar hintereinander anzuordnen. Die in beiden geschilderten Fällen resultierende so genannte einstufige Bauweise des Katalysators führt zu einer optimal kompakten Bauform des Katalysators mit möglichst geringem Platzbedarf.

Der Katalysator kann besonders vorteilhaft zweistufig aufgebaut sein, wobei zwei aus jeweils mehreren Waben aufgebaute Stufen, die jeweils für das Abgas durchlässig sind, in Strömungsrichtung hintereinander angeordnet und zwar voneinander beabstandet sind. Im Vergleich dazu, einen einstufen Katalysator mit einer entsprechend größeren durchströmbaren Länge der einzelnen Waben auszugestalten, weist der zweistufige Aufbau des Katalysators den Vorteil auf, dass angesichts von Fertigungstoleranzen der handelsüblichen Waben ein Versatz zweier unmittelbar hintereinander angeordneter Waben vermieden wird. Zudem können wirtschaftlich vorteilhaft die erwähnten handelsüblichen Waben verwendet werden.

Der Abstand zwischen den beiden Stufen des Katalysators ist außerdem in mehrfacher Hinsicht positiv: er bewirkt durch die unterschiedlichen Druckverhältnisse und Strömungsumlenkungen bzw. Verwirbelungen erstens eine weitere Verteilung und Homogenisierung des Abgases, und zweitens auch eine schalldämpfende Wirkung der Abgasanlage im Katalysator. Drittens bietet dieser Abstand zwischen den beiden Stufen die Möglichkeit, dort die erwähnte Wartungsöffnung anzuordnen, so dass aus diesem Zwischenraum zwischen den beiden Stufen der Zugriff auf die Waben beider Stufen möglich ist, sei es zur Reinigung oder für einen Austausch einzelner Waben.

Aufgrund der genannten Vorteile kann der zweistufige Katalysator auch noch eine oder mehr zusätzliche Stufen aufweisen, also insgesamt drei- oder mehrstufig ausgestaltet sein, sofern der zur Verfügung stehende Bauraum dies zulässt. Insbesondere kann durch die Zwei- oder Mehrstufigkeit die reaktive Gesamtoberfläche der Waben vergrößert werden, so dass Anforderungen an hohe Umsetzungsraten bestimmter im Abgas enthaltener Stoffe ―z.B. Stickoxide - erfüllt werden können.

Aufgrund der Turbulenzen, die in der Kammer und auch in der Vorkammer eines Umlenkschalldämpfers im Abgasstrom geschaffen werden, kann ggf. eine vorteilhafte Ausgestaltung der Düseneinrichtung mit mehreren Austrittsöffnungen der Düseneinrichtung vorgesehen sein., Auf diese Weise kann das Behandlungsfluid bereits bei seinem Eintritt in den Schalldämpfer weitgehend homogen im Abgasstrom vorliegen, da es auf mehrere dementsprechend kleinere Teilströme aufgeteilt und an unterschiedlichen Stellen in den Abgasstrom eingebracht wird. Unabhängig von der anschließenden Verwirbelung des Abgasstroms wird bereits durch die unterschiedlichen Eindüsungsstellen eine Vorab-Verteilung des Behandlungsfluids im Sinne einer Homogenisierung des später im Katalysator zu behandelnden Abgasstromes bewirkt. Die Anzahl der Austrittsöffnungen kann beispielsweise auch an die Menge des Behandlungsfluids angepasst sein, die pro Zeiteinheit in die Abgasanlage eingedüst werden soll.

Ausführungsbeispiele der Erfindung werden anhand der rein schematischen Darstellungen nachfolgend näher erläutert. Dabei zeigt
- Fig. 1: einen Längsschnitt durch ein erstes Ausführungsbeispiel einer Abgasanlage, wobei der den Schalldämpfer und den Katalysator betreffende Teil der Abgasanlage dargestellt ist,
- Fig. 2: einen Längsschnitt in Form eines Vertikalschnitts durch ein zweites Ausführungsbeispiel einer Abgasanlage,
- Fig. 3: einen vertikalen Querschnitt entlang der Linie III ― III von Fig. 2, und
- Fig. 4: einen vertikalen Querschnitt entlang der Linie IV - IV in Fig. 2.

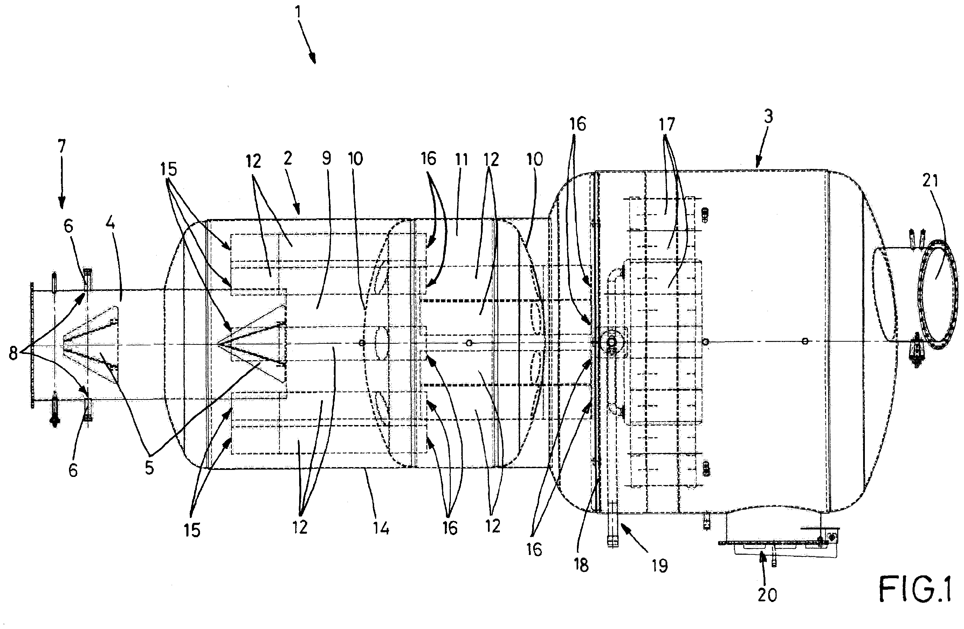

In den Zeichnungen ist jeweils mit 1 insgesamt eine lediglich ausschnittsweise dargestellte Abgasanlage bezeichnet, die jeweils einen Schalldämpfer 2 und stromabwärts davon einen Katalysator 3 aufweist. In Fig. 1 ist dem eigentlichen Schalldämpfer 2 ein Rohrstutzen 4 vorgeschaltet, in dessen Inneren ein Mischer 5 angeordnet ist. Auf Höhe des Mischers 5 sind zwei gegenüberliegende Düsen 6 einer Düseneinrichtung 7 angeordnet, wobei Austrittsöffnungen 8 der Düsen 6 nahe der Rohrwand dieses Rohrstutzens 4 angeordnet sind.

Ein weiterer Mischer 5 ist im Inneren des Schalldämpfers 2 angeordnet. Dieser zweite Mischer 5 befindet sich in einer Vorkammer 9 des Schalldämpfers 2, die durch eine Trennwand 10 von einer in Strömungsrichtung nachgeschalteten Kammer 11 des Schalldämpfers 2 abgetrennt ist. Das Abgas gelangt aus der Vorkammer 9 durch mehrere Halsrohre 12 in die Kammer 11, indem sich diese Halsrohre 12 durch entsprechende Öffnungen der Trennwand 10 erstrecken und bis in die Kammer 11 ragen.

Abgas, welches axial durch den Rohrstutzen 4 in die Vorkammer 9 gelangt, strömt zunächst, abgelenkt durch die Mischer 5, gegen die Trennwand 10 und gegen eine umlaufende Mantelfläche 14 der Vorkammer 9, wird dann umgelenkt und kann nur über erste, stromaufwärts angeordnete Enden 15 in die Halsrohre 12 eintreten und durch die Halsrohre 12 in die stromabwärts gelegene Kammer 11 eintreten.

Die stromabwärts gelegenen zweiten Enden der Halsrohre 12 sind mit 16 gekennzeichnet. Ihre Ausgestaltung wird später noch näher erläutert.

Das Abgas, welches aus der Vorkammer 9 in die Kammer 11 gelangt ist, kann aus der Kammer 11 ausschließlich über weitere Halsrohre 12 herausgelangen, da die Kammer 11 mittels einer weiteren Trennwand 10 vom Katalysator 3 abgetrennt ist. Die Halsrohre 12 innerhalb der Kammer 11 sind kreisförmig angeordnet, und zwar entlang einer Kreislinie mit einem geringeren Durchmesser als die Kreislinie, auf welcher die Halsrohre 12 in der Vorkammer 9 angeordnet sind.

Die zweiten Enden 16 der Halsrohre 12, welche aus der Kammer 11 in den Katalysator 3 führen, sind im Abstand vor so genannten Waben 17 des Katalysators 3 angeordnet. Zwischen den zweiten Enden 16 und den Waben 17 ist zudem noch ein Lochblech 18 angeordnet, welches zu einer zusätzlichen Verteilung des Abgases vor der Wabenfront führt.

Bei dem Ausführungsbeispiel der Fig. 1 ist der Katalysator 1 als so genannter einstufiger Katalysator dargestellt, mit einer einzigen, aus den Waben 17 gebildeten Katalysatorstufe.

Stromaufwärts von den Waben 17 ist eine Spüleinrichtung 19 dargestellt, die dazu dient, Ablagerungen aus den Waben 17 herauszuspülen, beispielsweise Rußablagerungen. Die Spüleinrichtung 19 ist hierzu als eine Anordnung von Druckluftleitungen ausgestaltet, die an mehreren Stellen vor der Wabenfront enden.

Weiterhin ist stromabwärts von den Waben 17 der Katalysator 3 mit einer Wartungsöffnung 20 versehen, die als Mannloch mit einem Durchmesser von mehr als 600 mm ausgestaltet ist. Das Abgas verlässt schließlich den dargestellten Bereich der Abgasanlage 1 durch eine Auslassöffnung 21.

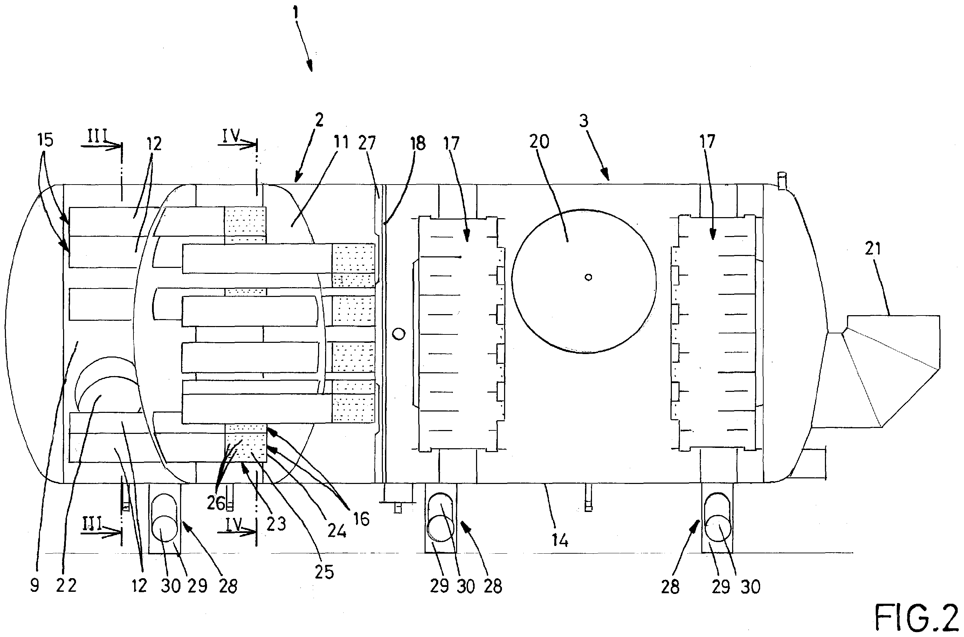

Fig. 2 zeigt ein zweites Ausführungsbeispiel einer ebenfalls lediglich ausschnittsweise dargestellten Abgasanlage 1. Auch hier ist die Auslassleitung 21 rechts dargestellt. Im Unterschied zum Ausführungsbeispiel der Fig. 1 erfolgt der Einlass des Abgases in den Schalldämpfer 2 allerdings nicht axial, sondern seitlich über die Mantelfläche 14 des gemeinsamen, im Wesentlichen zylindrischen Gehäuses, in welchem sowohl der Schalldämpfer 2 als auch der Katalysator 3 angeordnet sind. Um den Schalldämpfer 2 an einen V-Motor anzuschließen, sind zwei Einlassöffnungen 22 in der Mantelfläche 14 vorgesehen, so dass das Abgas seitlich in die Vorkammer 9 des Schalldämpfers 2 einströmt.

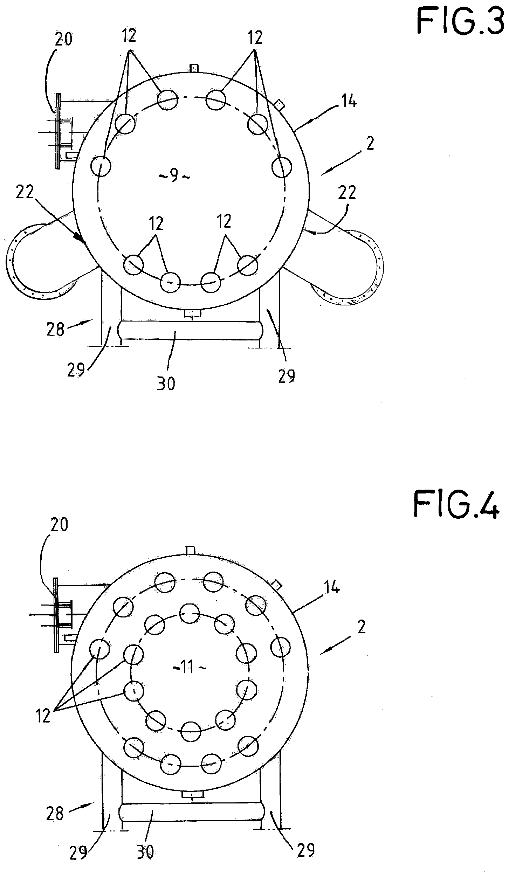

Anhand von Fig. 3 ist ersichtlich, dass die in dieser Vorkammer 9 angeordneten Halsrohre 12 ungleichmäßig verteilt sind. Grundsätzlich liegen sie auf einer Kreislinie und in gleichmäßigen Abständen zueinander. In dem Einströmungsbereich, der den Einlassöffnungen 22 innerhalb der Vorkammer 9 benachbart ist, ist die Vorkammer 9 jedoch frei von solchen Halsrohren 12, so dass das Abgas zunächst in die Vorkammer 9 einströmen kann, ohne unmittelbar auf ein im Strömungsweg befindliches Halsrohr 12 zu treffen.

Aus Fig. 2 ist die Ausgestaltung der Halsrohre 12 im Bereich ihrer jeweiligen zweiten Enden 16 ersichtlich: Diesen zweiten Enden 16 ist jeweils ein Verteiler 23 zugeordnet, der einerseits eine Prallplatte 24 aufweist, welche das zweite Ende 16 des Halsrohres 12 verschließt. Der an diese Prallplatte 24 anschließende Abschnitt des Halsrohres 12 ist als zylindrisches Lochblech 25 ausgestaltet und weist dementsprechend eine Vielzahl von Durchbrüchen 26 auf, durch welche das Abgas radial nach außen aus dem Halsrohr 12 strömen kann. Wie die Halsrohre 12 der Fig. 2 sind auch die Halsrohre 12 bei dem Ausführungsbeispiel der Fig. 1 ausgestaltet.

In Fig. 2 ist erkennbar, dass das Lochblech 18 im Katalysator 3 mit zusätzlichen Aussteifungsblechen 27 gegen unerwünschte Schwingungen gesichert ist, die zu einer unerwünschten Geräuschentwicklung oder einem vorzeitigen Bruch des Lochblechs 18 führen könnten.

Weiterhin ist bei dem Ausführungsbeispiel der Fig. 2 vorgesehen, dass der Katalysator 3 zweistufig ausgestaltet ist, also zwei separate und voneinander beabstandete Anordnungen von jeweils mehreren Waben 17 aufweist. In dem Abstand zwischen diesen beiden Stufen befindet sich die auch bei diesem Ausführungsbeispiel als Mannloch ausgestaltete Wartungsöffnung 20.

Fig. 4 zeigt einen vertikalen Schnitt durch die hintere Kammer 9 des Schalldämpfers 2 und verdeutlicht, dass die Halsrohre 12, welche die Kammer 11 mit dem Katalysator 3 verbinden, auf einer Kreislinie mit einem geringeren Durchmesser angeordnet sind als die demgegenüber äußeren Halsrohre 12, welche die Vorkammer 9 mit der Kammer 11 des Schalldämpfers 2 verbinden.

Das die Mantelfläche 14 aufweisende gemeinsame Gehäuse, welches sowohl den Schalldämpfer 2 als auch den Katalysator 3 aufnimmt, ist mithilfe eines Ständerwerks 28 vom Boden beabstandet angeordnet. Das Ständerwerk 28 weist mehrere über die Länge der Mantelfläche 14 verteilte Stützen 29 auf sowie Verbindungsstreben 30, die jeweils zwei Stützen 29 miteinander verbinden.

### Bezugszeichen:

- 1: Abgasanlage
- 2: Schalldämpfer
- 3: Katalysator
- 4: Rohrstutzen
- 5: Mischer
- 6: Düse
- 7: Düseneinrichtung
- 8: Austrittsöffnungen
- 9: Vorkammer
- 10: Trennwand
- 11: Kammer
- 12: Halsrohr
- 14: Mantelfläche
- 15: Erstes Ende
- 16: Zweites Ende
- 17: Waben
- 18: Lochblech
- 19: Spüleinrichtung
- 20: Wartungsöffnung
- 21: Auslassleitung
- 22: Einlassöffnung
- 23: Verteiler
- 24: Prallplatte
- 25: Zylindrisches Lochblech
- 26: Durchbrüche
- 27: Aussteifungsblech
- 28: Ständerwerk
- 29: Stütze
- 30: Strebe

## Patentansprüche

1. Abgasanlage (1) einer Verbrennungseinrichtung, mit
• einem Schalldämpfer (2),
• einem Katalysator (3) zur Behandlung eines im Abgas enthaltenen Schadstoffs,
• einer dem Katalysator (3) in Strömungsrichtung des Abgases stromaufwärts vorgeschalteten Düseneinrichtung (7) mit einer Austrittsöffnung (8), durch welche ein Abgas-Behandlungsfluid in das Abgas einspritzbar ist,
• und einer zwischen der Düseneinrichtung (7) und dem Katalysator (3) angeordneten Mischerstrecke, in welcher eine Mischeinrichtung zur intensiven Vermischung des Abgases mit dem Abgas-Behandlungsfluid angeordnet ist,
wobei
• sich der Schalldämpfer (2) zwischen der Düseneinrichtung (7) und dem Katalysator (3) erstreckt,
• der Schalldämpfer (2) in Form eines als Mischeinrichtung dienenden Umlenkschalldämpfers ausgestaltet ist,
• der Schalldämpfer (2) eine Kammer (11) aufweist, die vom Katalysator (3) durch eine Trennwand (10) abgetrennt ist,
• die Trennwand (10) von Halsrohren (12) durchsetzt ist, deren jeweiliges erstes, stromaufwärts angeordnetes Ende (15) in der Kammer (11) angeordnet ist,
und deren jeweiliges zweites, stromabwärts angeordnetes Ende (16) jenseits der Trennwand (10) stromaufwärts vor dem Katalysator (3) angeordnet ist,
• und der Schalldämpfer (2) und der Katalysator (3) in einem gemeinsamen Gehäuse angeordnet sind,
**dadurch gekennzeichnet, dass**
• die Halsrohre (12) auf beiden Seiten der Trennwand (10) in der jeweiligen an die Trennwand grenzenden Kammer enden, und
• die Bestandteile der Abgasanlage (1) in der Art angeordnet sind, dass das gesamte Abgas auf einem einzigen gemeinsamen Weg nacheinander durch die Behandlungsstufen der Abgasanlage (1) strömt.

2. Abgasanlage nach Anspruch 1,
**dadurch gekennzeichnet,**
**dass** dem zweiten Ende (16) eines Halsrohrs (12) ein Verteiler (23) zugeordnet ist, welcher den durch das Halsrohr (12) strömenden Abgasstrom radial nach außen umlenkt.

3. Abgasanlage nach Anspruch 2,
**dadurch gekennzeichnet,**
**dass** der Verteiler (23) eine Prallplatte (24) aufweist, welche das zweite Ende (16) verschließt,
sowie stromaufwärts vor der Prallplatte (24) angeordnete Durchbrüche (26) in der Wand des Halsrohrs (12).

4. Abgasanlage nach einem der vorhergehenden Ansprüche,
**dadurch gekennzeichnet,**
**dass** im Schalldämpfer (2) stromaufwärts vor der Kammer (11) eine zweite, als Vorkammer (9) bezeichnete Kammer angeordnet ist,
wobei zwischen der Vorkammer (9) und der Kammer (11) eine zweite Trennwand (10) angeordnet ist und auch diese zweite Trennwand (10) von Halsrohren (12) durchsetzt ist.

5. Abgasanlage nach Anspruch 4,
**dadurch gekennzeichnet,**
**dass** den Halsrohren (12), welche die zweite Trennwand (10) durchsetzen, im Bereich ihres jeweiligen zweiten Endes (16) ein Verteiler (23) zugeordnet ist, welcher den durch das jeweilige Halsrohr (12) strömenden Abgasstrom radial nach außen umlenkt.

6. Abgasanlage nach einem der vorhergehenden Ansprüche,
**dadurch gekennzeichnet,**
**dass** das Gehäuse des Katalysators (3) eine Wartungsöffnung (20) aufweist.

7. Abgasanlage nach Anspruch 6,
**dadurch gekennzeichnet,**
**dass** die Wartungsöffnung (20) als Mannloch mit einer Öffnungsweite von wenigstens 400 mm ausgestaltet ist.

8. Abgasanlage nach einem der vorhergehenden Ansprüche,
**dadurch gekennzeichnet,**
**dass** in der Mantelfläche (18) des Schalldämpfers (2) eine Einlassöffnung (22) für das Abgas angeordnet ist,
und **dass** das Innere des Schalldämpfers (2) in dem der Einlassöffnung (22) benachbarten Einströmungsbereich frei von Halsrohren (12) ist.

9. Abgasanlage nach einem der vorhergehenden Ansprüche,
**dadurch gekennzeichnet,**
**dass** der Katalysator (3) zweistufig aufgebaut ist,
wobei zwei aus so genannten Waben (17) aufgebaute und für das Abgas durchlässige Stufen in Strömungsrichtung voneinander beabstandet angeordnet sind.

10. Abgasanlage nach einem der vorhergehenden Ansprüche,
**dadurch gekennzeichnet,**
**dass** der Schalldämpfer (2) frei von zusätzlichen, als sogenannte Mischer (5) bezeichneten Verwirbelungseinrichtungen ist.

11. Abgasanlage nach einem der vorhergehenden Ansprüche,
**dadurch gekennzeichnet,**
**dass** die Austrittsöffnung (8) der Düseneinrichtung (7) näher an der Mantelfläche (18) des Schalldämpfers (2) als an dessen Mittelachse angeordnet ist.

## Claims

1. Exhaust gas system (1) for a combustion appliance, having
• a sound absorber (2),
• a catalytic converter (3) for the treatment of hazardous substances contained in exhaust gas,
• a nozzle assembly (7) that is arranged upstream of the catalytic converter (3) in the exhaust gas flow and has an outlet hole (8) through which an exhaust gas treatment fluid can be injected into the exhaust gas,
• and having a mixer section that is disposed between the nozzle assembly (7) and the catalytic converter (3) and in which a mixing apparatus for intensive mixing of the exhaust gas with the exhaust gas treatment fluid is disposed,
wherein
• the sound absorber (2) extends between the nozzle assembly (7) and the catalytic converter (3),
• the sound absorber (2) is designed in the form of a deflecting sound absorber that serves as mixing apparatus,
• the sound absorber (2) incorporates a chamber (11) that is separated from the catalytic converter (3) by a partition wall (10),
• the partition wall (10) is penetrated by neck pipes (12) of which each first end (15) that is disposed upstream is disposed in the chamber (11),
and of which each second end (16) that is disposed downstream is disposed on the other side of the partition wall (10) upstream of the catalytic converter (3),
• and the sound absorber (2) and the catalytic converter (3) are disposed in a common housing,
**characterised in that**
• the neck pipes (12) end on both sides of the partition wall (10) in whichever chamber adjoins the partition wall, and
• the component parts of the exhaust gas system (1) are arranged in such a way that all of the exhaust gas flows along a single common path through each of the successive treatment stages of the exhaust gas system (1).

2. Exhaust gas system in accordance with claim 1,
**characterised in that**
a distributor (23) that deflects radially outwards the exhaust gas flowing through the neck pipe (12) is assigned to the second end (16) of a neck pipe (12).

3. Exhaust gas system in accordance with claim 2,
**characterised in that** the distributor (23) incorporates a baffle plate (24) to shut off the second end (16) and **in that** the wall of the neck pipe (12) is provided with through-holes (26) that are disposed upstream of the baffle plate (24).

4. Exhaust gas system in accordance with any one of the foregoing claims,
**characterised in that**
a second chamber (9) referred to as a "pre-chamber" is disposed in the sound absorber (2) upstream of the chamber (11), wherein a second partition wall (10) is disposed between the pre-chamber (9) and the chamber (11) and this second partition wall (10) is also penetrated by neck pipes (12).

5. Exhaust gas system in accordance with claim 4,
**characterised in that**
a distributor (23) is in the area of their second ends (16) assigned to the neck pipes (12) that penetrate the second partition wall (10), which distributor deflects radially outwards the exhaust gas flowing through each neck pipe (12).

6. Exhaust gas system in accordance with any one of the foregoing claims,
**characterised in that**
the housing of the catalytic converter (3) incorporates a maintenance access hole (20).

7. Exhaust gas system in accordance with claim 6,
**characterised in that**
the maintenance access hole (20) is designed as a manhole with an access hole width of at least 400 mm.

8. Exhaust gas system in accordance with any one of the foregoing claims,
**characterised in that**
an inlet hole (22) for the exhaust gas is disposed in the outer surface (18) of the sound absorber (2) and **in that** the interior of the sound absorber (2) is free of any neck pipes (12 in the inflow area adjoining the inlet hole (22).

9. Exhaust gas system in accordance with any one of the foregoing claims,
**characterised in that**
the catalytic converter (3) is constructed in two stages, where two stages that are constructed from so-called honeycomb material (17) and let the exhaust gas through are disposed so as to be spaced apart from each other in the direction of flow.

10. Exhaust gas system in accordance with any one of the foregoing claims,
**characterised in that**
the sound absorber (2) is free of additional swirling devices that are referred to as "mixers" (5).

11. Exhaust gas system in accordance with any one of the foregoing claims,
**characterised in that**
the outlet hole (8) of the nozzle assembly (7) is disposed closer to the outer surface (18) of the sound absorber (2) than to its central axis.

## Revendications

1. Installation de gaz d'échappement (1) d'un dispositif de combustion, comprenant
• un silencieux (2),
• un catalyseur (3) pour traiter une substance nocive présente dans les gaz d'échappement,
• un dispositif à injecteur (7) situé en amont du catalyseur (3) dans le sens d'écoulement des gaz d'échappement, avec un orifice de sortie (8) par lequel un fluide de traitement des gaz d'échappement est injectable dans les gaz d'échappement,
• et un circuit mélangeur disposé entre le dispositif à injecteur (7) et le catalyseur (3), circuit dans lequel est disposé un dispositif mélangeur destiné à mélanger intensément les gaz d'échappement avec le fluide de traitement des gaz d'échappement,
sachant que
• le silencieux (2) s'étend entre le dispositif à injecteur (7) et le catalyseur (3),
• le silencieux (2) est configuré en forme de silencieux à renvoi servant de dispositif mélangeur,
• le silencieux (2) présente une chambre (11) qui est séparée du catalyseur (3) par une cloison séparatrice (10),
• le cloison séparatrice (10) est traversée par des tubes à collet (12) dont la première extrémité (15) respective, disposée en amont, est disposée dans la chambre (11),
et dont la seconde extrémité (16) respective disposée en aval est disposée, en amont du catalyseur (3), au-delà de la cloison séparatrice (10),
• et que le silencieux (2) et le catalyseur (3) sont disposés dans un carter conjoint,
**caractérisée en ce que**
• les tubes à collet (12) sur les deux côtés de la cloison séparatrice (10) aboutissent dans la chambre respective limitrophe de la cloison séparatrice, et que
• les éléments constitutifs de l'installation de gaz d'échappement (1) sont disposés de façon que la totalité des gaz d'échappement traverse successivement, selon un seul itinéraire commun, les étages de traitement de l'installation de gaz d'échappement (1).

2. Installation de gaz d'échappement selon la revendication 1,
**caractérisée en ce**
**qu'**est affecté à la seconde extrémité (16) d'un tube à collet (12) un distributeur (23) qui renvoie radialement vers l'extérieur le flux de gaz d'échappement s'écoulant dans le tube à collet (12).

3. Installation de gaz d'échappement selon la revendication 2,
**caractérisée en ce**
**que** le distributeur (23) présente une plaque chicane (24) qui obture la seconde extrémité (16), ainsi que des perçages (26), disposés en amont de la plaque chicane (24), ménagés dans la paroi du tube à collet (12).

4. Installation de gaz d'échappement selon l'une des revendications précédentes,
**caractérisée en ce**
**que** dans le silencieux (2) est disposée, en amont de la chambre (11), une seconde chambre appelée « préchambre » (9),
sachant qu'entre la préchambre (9) et la chambre (11) est disposée une seconde cloison séparatrice (10) et que cette seconde cloison séparatrice (10) est traversée par des tubes (12) à collet.

5. Installation de gaz d'échappement selon la revendication 4,
**caractérisée en ce**
**qu'**est affecté aux tubes à collet (12) qui traversent la seconde cloison séparatrice (10), dans la zone de leur seconde extrémité (16) respective, un distributeur (23) qui renvoie radialement vers l'extérieur le flux de gaz d'échappement s'écoulant dans le tube à collet (12) respectif.

6. Installation de gaz d'échappement selon l'une des revendications précédentes,
**caractérisée en ce**
**que** le carter du catalyseur (3) présente une ouverture de maintenance (20).

7. Installation de gaz d'échappement selon la revendication 6,
**caractérisée en ce**
**que** l'ouverture de maintenance (20) est configurée en trou d'homme avec une taille d'ouverture d'au moins 400 mm.

8. Installation de gaz d'échappement selon l'une des revendications précédentes,
**caractérisée en ce**
**que** dans la surface enveloppante (18) du silencieux (2) est disposé un orifice d'admission (22) du gaz d'échappement, et que l'intérieur du silencieux (2) dans la zone d'afflux voisine de l'orifice d'admission (22) est exempt de tubes à collet (12).

9. Installation de gaz d'échappement selon l'une des revendications précédentes,
**caractérisée en ce**
**que** le catalyseur (3) est construit biétagé, sachant que deux étages construits à partir d'alvéoles (17) ainsi nommée et laissant passer le gaz d'échappement sont disposés réciproquement distants dans le sens de l'écoulement.

10. Installation de gaz d'échappement selon l'une des revendications précédentes,
**caractérisée en ce**
**que** le silencieux (2) est exempt de dispositifs supplémentaires de mise en turbulence qu'il est convenu d'appeler « mélangeurs » (5).

11. Installation de gaz d'échappement selon l'une des revendications précédentes,
**caractérisée en ce**
**que** l'orifice de sortie (8) du dispositif à injecteur (7) est disposé plus près de la surface enveloppante (18) du silencieux (2) que de son axe médian.
